# EUROPÄISCHE PATENTSCHRIFT

(11) **EP 2 532 860 B1**
(45) Veröffentlichungstag und Bekanntmachung des Hinweises auf die Patenterteilung: **02.10.2019**
(21) Anmeldenummer: 12003592.8
(22) Anmeldetag: 08.05.2012
(51) Int. Cl.: F02D 13/02

(54) **Brennkraftmaschine**
Combustion engine
Moteur à combustion interne

(30) Priorität: 10.06.2011 DE 102011103870
(43) Veröffentlichungstag der Anmeldung: 12.12.2012
(73) Patentinhaber: Volkswagen Aktiengesellschaft, 38440 Wolfsburg (DE)
(72) Erfinder: Groenendijk, Axel, 38518 Gifhorn (DE)

(56) Entgegenhaltungen:
- DE-A1- 10 359 058
- DE-A1-102007 040 697
- DE-A1-102007 046 656
- DE-A1-102007 049 109

## Beschreibung

Die Erfindung betrifft eine Brennkraftmaschine, insbesondere eine Dieselbrennkraftmaschine, insbesondere eines Kraftfahrzeugs, sowie ein Verfahren zum Betreiben einer solchen Brennkraftmaschine, mit mindestens einem Arbeitszylinder, dem wenigstens zwei Einlass- und zwei Auslassventile zugeordnet sind und in dem ein Hubkolben oszillierend zwischen einem oberen Totpunkt (OT) und einem unteren Totpunkt (UT) bewegt wird, wobei der Hubkolben abwechselnd mit einem Ladungswechselhub, der einen Ausstoßtakt sowie einen Ansaugtakt umfasst, und einem Arbeitshub, der einen Verdichtungstakt und einen Arbeitstakt umfasst, eine Kurbelwelle antreibt, wobei in Abhängigkeit von einem Kurbelwellenwinkel im Ladungswechselhub des Hubkolbens die Einlass- und Auslassventile geöffnet und geschlossen werden, wobei eine Verdichtung in dem Arbeitszylinder dadurch abgesenkt wird, dass nach einem UT am Ende des Ladungswechselhubes ein Schließzeitpunkt von zumindest einem Einlassventils soweit nach spät verschoben wird, dass ein Teil der zuvor im Ansaugtakt angesaugten Frischgasmenge durch dieses Einlassventil im Verdichtungstakt wieder ausgeschoben wird.

Beim bekannten Miller-Cycle wird der Zeitpunkt "Einlassventil schließt" (ES) nach spät verschoben. Auf diese Weise wird bereits im Zylinder befindliches Frischgas z.T. wieder in den Ansaugtrakt der Brennkraftmaschine ausgeschoben. Dies bedeutet einen Füllungsnachteil, der aber über eine Aufladung mit einem geeigneten Ladedruck kompensiert werden kann. Dabei wird beispielsweise der Ladedruck im Volumen zwischen dem Ausgang eines Turboladers und dem Einlass der Brennkraftmaschine so geregelt, dass der Ladedruck in jedem Miller-Betriebspunkt, d.h. jeder Betriebspunkt in dem der "Miller-Cycle" zur Anwendung kommt, dem theoretischen Verdichtungsenddruck in den Arbeitszylindern der Brennkraftmaschine zum Zeitpunkt Einlassventil schließt entspricht. Für die Regelung, wahlweise auch Steuerung, kommen Druck- und/oder Temperatur- und/oder Massenstromsensoren oder sinnvolle Kombisensoren der drei angesprochenen Sensortypen zum Einsatz.

Der positive Effekt des Miller-Cycles mittels frühem oder spätem Zeitpunkt für das Schließen des Einlassventils auf die NOₓ-Emission und Homogenisierbarkeit des Dieselgemischs ist bekannt. Eine Dieselbrennkraftmaschine mit einer variablen Ventilsteuerung, die nach dem Miller-Cycle betrieben werden kann, ist aus der DE 10 2006 042 912 A1 oder der DE 10 2007 049 109 A1 bekannt.

Die DE 10 2007 040 697 A1 beschreibt eine Brennkraftmaschine mit zwei gemischten Nockenwellen, denen jeweils ein Nockenwellensteller zugeordnet ist.

Ausgehend von diesem Stand der Technik lag der Erfindung die Aufgabe zugrunde, eine Brennkraftmaschine anzugeben, die sich durch einen höheren Wirkungsgrad auszeichnet.

Diese Aufgabe wird erfindungsgemäß durch eine Brennkraftmaschine gemäß dem unabhängigen Patentanspruch 1 sowie durch ein Verfahren gemäß dem unabhängigen Patentanspruch 6 gelöst. Vorteilhafte Ausgestaltungen der Erfindung sind Gegenstand der jeweiligen abhängigen Patentansprüche und ergeben sich aus der nachfolgenden Beschreibung der Erfindung.

Der Erfindung liegt der Gedanke zugrunde, bei einer Brennkraftmaschine gemäß der DE 10 2006 042 912 A1, bei der gegenüber einer Brennkraftmaschine mit festen Steuerzeiten die Öffnungszeit des verstellbaren Auslassventils gezwungenermaßen verkürzt werden musste (um bei einer Verstellung nach spät eine Kollision mit dem Kolben der Brennkraftmaschine zu vermeiden), zusätzlich auch die Öffnungsdauer des festen Auslassventils zu verkürzen, wodurch sich die Möglichkeit ergibt, den Expansionshub des Kolbens besser auszunutzen, wodurch eine Wirkungsgradsteigerung erreicht werden kann.

Eine gattungsgemäße Brennkraftmaschine, die mindestens einen Arbeitszylinder mit einem zwischen einem oberen Totpunkt (OT) und einem unteren Totpunkt (UT) bewegbaren Kolben sowie jeweils mindestens zwei dem Arbeitszylinder zugeordnete Einlass- und zwei Auslassventile sowie mindestens zwei Nockenwellen aufweist, die als sogenannte gemischte Nockenwelle ausgebildet ist, d.h. diese Nockenwellen betätigen sowohl mindestens ein Auslass- und ein Einlassventil, wobei an einer der Nockenwellen, der variablen Nockenwelle, ein Versteller angeordnet ist, der die Ventilsteuerzeiten der entsprechenden Ein- und Auslassventile verstellt, ist demnach erfindungsgemäß dadurch weitergebildet, dass das Öffnen des von der festen Nockenwelle betätigten Auslassventils in einem Bereich zwischen 0°KW vor UT (unterem Totpunkt) und 25°KW vor UT, vorzugsweise in einem Bereich von 10°KW vor UT und 20°KW vor UT und besonders bevorzugt bei ca. 20°KW vor UT erfolgt. Durch dieses vergleichsweise späte Öffnen des von der festen Nockenwelle betätigten Auslassventils ergibt sich dessen erfindungsgemäß verkürzte Öffnungsdauer, da eine Verlagerung der Öffnungsdauer nach spät nicht in beliebigem Maße möglich ist, da es ansonsten zu einer Kollision des Ventils mit dem sich dann im OT befindlichen Kolben kommen würde.

In einer bevorzugten Ausführungsform der erfindungsgemäßen Brennkraftmaschine ist der Versteller der variablen Nockenwelle derart ausgebildet, dass dieser einen Verstellbereich für die Ventilsteuerzeiten von ca. 50° ermöglicht.

Vorzugsweise ist vorgesehen, dass in einer ersten Verstellposition der variablen Nockenwelle das von dieser Nockenwelle betätigte Auslassventil früher öffnet als das von der festen Nockenwelle betätigte Auslassventil, während das von der variablen Nockenwelle betätigte Einlassventil im Wesentlichen gleichzeitig mit dem von der festen Nockenwelle betätigten Einlassventil öffnet und schließt (d.h. übereinstimmende Öffnungsdauer). Diese erste Verstellposition kann durch einen Verstellwinkel von 0° definiert werden, bei dem die variable Nockenwelle als nicht gegenüber der festen Nockwelle verstellt (d.h. verdreht) angesehen werden kann. In dieser ersten Verstellposition mit einem Verstellwinkel von 0° kann das von der variablen Nockenwelle betätigte Auslassventil vorzugsweise bei ca. 45°KW vor UT öffnen.

Ein Betrieb der Brennkraftmaschine in dieser ersten Verstellposition sowie in einem Bereich des Verstellwinkels von bis zu ca. 5° eignet sich vorzugsweise für einen Kaltlauf der Brennkraftmaschine, d.h. wenn diese noch nicht ihre Betriebstemperatur erreicht hat. Durch die Kombination aus einer übereinstimmenden Öffnungsdauer der Einlassventile der variablen und der festen Nockenwelle mit der definierten Überschneidung der Öffnungsdauer der von den Nockenwellen betätigten Auslassventile kann die Aufheizung eines der Brennkraftmaschine nachgeschalteten Katalysators positiv beeinflusst und eine maximale effektive Verdichtung erreicht werden, woraus ein Liefergradoptimum bei niedrigen Drehzahlen resultieren kann.

In einer bevorzugten Ausführungsform des erfindungsgemäßen Verfahrens kann weiterhin vorgesehen sein, die Brennkraftmaschine bei Volllast mit einem Verstellwinkel von ca. 0° bis ca. 15° zu betreiben, wodurch eine Liefergradsteigerung über einen fülligeren Hubverlauf erreicht werden kann. Zudem sinkt die effektive Verdichtung leicht, womit eine entsprechende Spitzendruckbegrenzung verbunden ist.

In einer weiterhin bevorzugten Ausführungsform des erfindungsgemäßen Verfahrens kann vorgesehen sein, die Brennkraftmaschine bei Teillast mit einem Verstellwinkel von ca. 15° bis ca. 50° zu betreiben, wodurch die Expansionsverluste reduziert und eine hinsichtlich der erzeugten Abgasemissionen vorteilhafte effektive Verdichtung in einem Bereich von 14 bis 15 erreicht werden kann.

Die Erfindung wird nachfolgend anhand eines in den Zeichnungen dargestellten Ausführungsbeispiels näher erläutert. Diese zeigen in
- Fig. 1:: eine beispielhafte Ausführungsform einer Brennkraftmaschine in schematischer Ansicht,

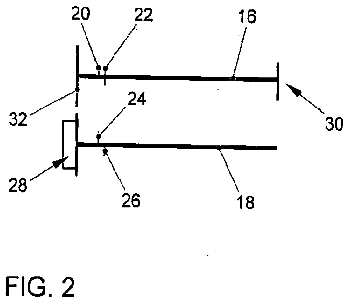

- Fig. 2:: eine schematische Darstellung der Nockenwellenanordnung bei der Brennkraftmaschine gemäß Fig. 1,
- Fig. 3:: eine graphische Darstellung der Ventilbewegung der Einlass- und Auslassventile bei einem Verstellwinkel von 0°;
- Fig. 4:: eine graphische Darstellung der Ventilbewegung der Einlass- und Auslassventile bei einem Verstellwinkel von 10°;
- Fig. 5:: eine graphische Darstellung der Ventilbewegung der Einlass- und Auslassventile bei einem Verstellwinkel von 40°; und
- Fig. 6:: ein p-V-Diagramm für die den Fig. 4 und 5 entsprechenden Verstellpositionen der variablen Nockenwelle.

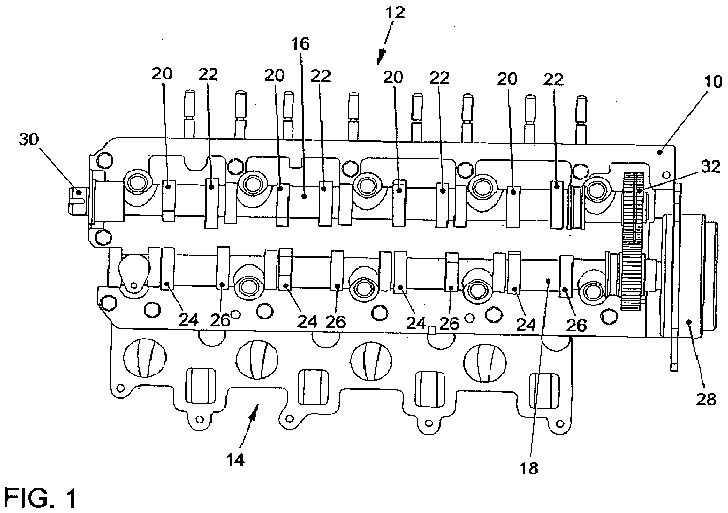

Die in Fig. 1 dargestellte, beispielhafte Ausführungsform einer erfindungsgemäßen Brennkraftmaschine umfasst einen Zylinderkopf 10, in den nicht näher dargestellte Arbeitszylinder integriert sind, in denen sich jeweils ein Hubkolben (nicht dargestellt) oszillierend zwischen einem oberen Totpunkt (OT) und einem unteren Totpunkt (UT) bewegt. Der Zylinderkopf 10 umfasst eine Auslassseite 12, an der Abgase aus den Arbeitszylindern abgeführt werden, und eine Einlassseite 14, an der den Arbeitszylindern Frischgas zugeführt wird.

Jedem Arbeitszylinder sind zwei Einlassventile (nicht dargestellt) und zwei Auslassventile (nicht dargestellt) zugeordnet, wobei eine feste Nockenwelle 16 und eine variable Nockenwelle 18 vorgesehen sind. Die feste Nockwelle 16 trägt Einlassnocken 20, die jeweils ein Einlassventil betätigen, und Auslassnocken 22, die jeweils ein Auslassventil betätigen. Ebenso trägt die variable Nockenwelle 18 Einlassnocken 24, die jeweils ein Einlassventil betätigen, und Auslassnocken 26, die jeweils ein Auslassventil betätigen. Auf beiden Nockenwellen 16, 18 wechseln sich in Längsrichtung gesehen jeweils Einlassnocken 20, 24 und Auslassnocken 22, 26 ab. Auf diese Weise werden die beiden Einlassventile und Auslassventile eines jeden Arbeitszylinders von verschiedenen Nockenwellen 16, 18 betätigt. Somit ist jede der Nockenwellen 16, 18 eine sogenannte gemischte Nockenwelle, d.h. jede Nockenwelle 16, 18 betätigt sowohl Einlass- als auch Auslassventile über entsprechende Einlassnocken 20, 24 bzw. Auslassnocken 22, 26.

Die Steuerzeiten der festen Nockenwelle 16 für die dieser zugeordneten Einlass- und Auslassventile sind unveränderbar festgelegt. An der variablen Nockenwelle 18 ist ein Versteller 28 angeordnet, über den die Steuerzeiten der dieser zugeordneten Einlass- und Auslassventile verändert werden können, indem die zweite Nockenwelle 18 durch den Versteller 28 verdreht wird. Die feste Nockenwelle 16 wird bei 30 von einer nicht dargestellten Kurbelwelle der Brennkraftmaschine angetrieben. Die feste Nockenwelle 16 treibt dann ihrerseits über Zahnräder 32 die variable Nockenwelle 18 an.

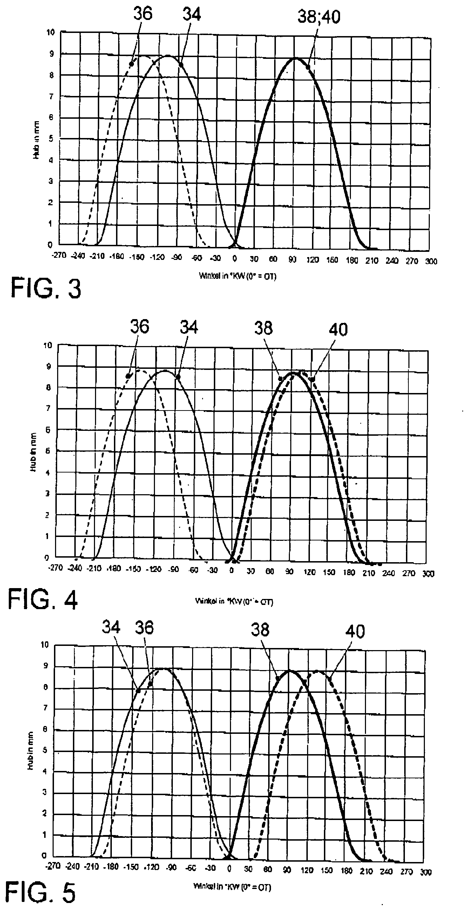

In den Fig. 3 bis 5 ist jeweils auf der horizontalen Achse ein Kurbelwellenwinkel (in °KW) und auf der vertikalen Achse eine Hubbewegung (in mm) aufgetragen. Auf der horizontalen Achse liegt bei -180°KW ein unterer Totpunkt (UT) des Hubkolbens vor dem Ladungswechsel, bei 0°KW ein oberer Totpunkt (OT) des Hubkolbens während des Ladungswechsels und bei 180°KW ein unterer Totpunkt (UT) des Hubkolbens nach dem Ladungswechsel. Ein erster Graph 34 veranschaulicht die Hubbewegung über dem Kurbelwellenwinkel für diejenigen Auslassventile, die von den Auslassnocken 22 der festen Nockenwelle 16 gesteuert werden. Ein zweiter Graph 36 (gestrichelt) veranschaulicht die Hubbewegung über dem Kurbelwellenwinkel für diejenigen Auslassventile, die von den Auslassnocken 26 der variablen Nockenwelle 18 gesteuert werden. Ein dritter Graph 38 veranschaulicht die Hubbewegung über dem Kurbelwellenwinkel für diejenigen Einlassventile, die von den Einlassnocken 20 der festen Nockenwelle 16 gesteuert werden und ein vierter Graph 40 (gestrichelt) veranschaulicht die Hubbewegung über dem Kurbelwellenwinkel für diejenigen Einlassventile, die von den Einlassnocken 24 der variablen Nockenwelle 18 gesteuert werden.

In Fig. 3 ist eine Stellung der variablen Nockenwelle mit einem Verstellwinkel von 0°KW dargestellt, d.h. die Nockenwellen 16, 18 gelten als nicht gegeneinander verdreht. In dieser Verstellposition öffnet das von der variablen Nockenwelle 18 betätigte Auslassventil bei ca. -225°KW, was 45°KW vor dem UT des Kolbens entspricht. Das entsprechende Auslassventil der festen Nockenwelle 16 öffnet dagegen bei ca. -200°KW, was 20°KW vor UT des Kolbens entspricht. Die Hubbewegungen der sowohl von der festen 16 als auch der variablen Nockenwelle 18 betätigten Einlassventile, ist dagegen synchron.

In Fig. 4 ist eine Stellung der variablen Nockenwelle18 mit einem Verstellwinkel von 10° dargestellt. In dieser Verstellposition öffnet das von der variablen Nockenwelle 18 betätigte Auslassventil bei einem Kurbelwellenwinkel von ca. -215°KW, was 35°KW vor UT des Kolbens entspricht. Gleichzeitig verschiebt sich die Hubbewegung und somit das Öffnen und Schließen des von der variablen Nockenwelle 18 betätigten Einlassventils um 10° gegenüber dem von der festen Nockenwelle 16 betätigten Einlassventil nach spät.

In der Fig. 5 ist eine Stellung der variablen Nockenwelle mit einem Verstellwinkel von ca. 40° dargestellt. In dieser Verstellposition öffnet das von der variablen Nockenwelle 18 betätigte Auslassventil bei einem Kurbelwellenwinkel von ca. -185°KW, was 5°KW vor UT des Kolbens entspricht. Gleichzeitig verschiebt sich die Hubbewegung und somit das Öffnen und Schließen des von der variablen Nockenwelle 18 betätigten Einlassventils um 40° gegenüber dem von der festen Nockenwelle 16 betätigten Einlassventil nach spät. In diesem Verstellbereich der variablen Nockenwelle 18 wird die Brennkraftmaschine in bekannter Weise (vgl. DE 10 2006 042 912 A1) in einem Miller-Cycle betrieben.

Eine Verstellung der variablen Nockenwelle in einem Winkelbereich von 0° bis 5° ist für einen Kaltlauf der erfindungsgemäßen Brennkraftmaschine vorgesehen. Durch ein relativ frühes Öffnen des von der variablen Nockenwelle 18 betätigten Auslassventils soll das Aufheizen eines der Brennkraftmaschine nachgeschalteten (nicht dargestellten) Abgas-Katalysators sowie ein Hochlaufen eines (nicht dargestellten) Abgasturboladers unterstützt werden, wohingegen durch ein relativ frühes Schließen des von der variablen Nockenwelle 18 betätigten Einlassventils der Liefergrad bei niedrigen Drehzahlen der Brennkraftmaschine optimiert und eine maximale effektive Verdichtung erreicht werden soll.

Eine Verstellung der variablen Nockenwelle 18 in einem Winkelbereich von 0° bis 15° ist für den Volllast-Betrieb der erfindungsgemäßen Brennkraftmaschine vorgesehen. Durch ein in geringem Maße nach spät verstelltes Schließen des von der variablen Nockenwelle 18 betätigten Einlassventils soll bei einem weiterhin guten Liefergrad eine geringe Absenkung der effektiven Verdichtung mit dem Ziel der Spitzendruckbegrenzung erreicht werden. Dabei ist vorgesehen, die variable Nockenwelle 18 bei relativ niedrigen Drehzahlen in Richtung 5° Verstellwinkel und bei relativ hohen Drehzahlen in Richtung 15° Verstellwinkel zu verstellen.

Eine Verstellung der variablen Nockenwelle 18 in einem Winkelbereich von 15° bis 50° ist für einem Betrieb der erfindungsgemäßen Brennkraftmaschine mit Teillast vorgesehen. Durch ein relativ spätes Öffnen des von der variablen Nockenwelle 18 betätigten Auslassventils sollen die Expansionsverluste minimiert werden, wohingegen durch ein relativ spätes Schließen des von der variablen Nockenwelle 18 betätigten Einlassventils die effektive Verdichtung bei ca. 14 bis 15 eingestellt werden soll, um das Emissionsverhalten der Brennkraftmaschine zu optimieren.

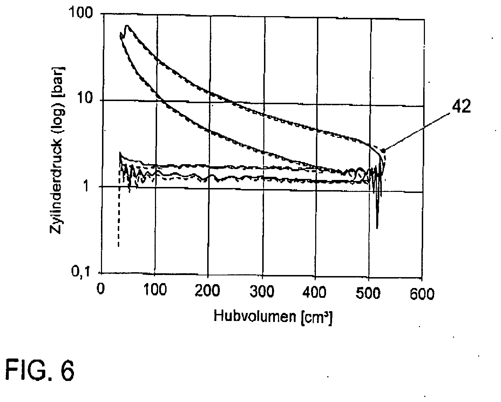

In der Fig. 6 ist der Verlauf des Zylinderdrucks (logarithmisch; in bar) über dem Hubvolumen (in cm³) eines Arbeitszylinders der erfindungsgemäßen Brennkraftmaschine für die in den Fig. 4 und 5 dargestellten Verstellpositionen der variablen Nockenwelle 18 dargestellt. Dabei ist das Integral des Zylinderdrucks über dem Hubvolumen ein Maß für die Motorleistung. Es zeigt sich, dass durch die erfindungsgemäße Ausgestaltung der Brennkraftmaschine mit einem relativ späten Öffnen des von der festen Nockenwelle 16 betätigen Auslassventils in Verbindung mit einer Verstellung des von der variablen Nockenwelle betätigten Auslassventils nach spät die Motorleistung um die mit 42 gekennzeichnete Fläche erhöht werden kann. Diese erhöhte Motorleistung kann im Teillastbetrieb für eine Wirkungsgradsteigerung des Brennkraftmaschine ausgenutzt werden.

### Bezugszeichenliste

- 10: Zylinderkopf
- 12: Auslassseite
- 14: Einlassseite
- 16: erste Nockenwelle
- 18: zweite Nockenwelle
- 20: Einlassnocken der ersten Nockenwelle 16
- 22: Auslassnocken der ersten Nockenwelle 16
- 24: Einlassnocken der zweiten Nockenwelle 18
- 26: Auslassnocken der zweiten Nockenwelle 28
- 28: Versteller
- 30: Antrieb erste Nockenwelle 16
- 32: Zahnrad
- 34: Graph: festes Auslassventil
- 36: Graph: variables Auslassventil
- 38: Graph: festes Einlassventil
- 40: Graph: variables Einlassventil
- 42: Fläche im p-V-Diagramm

## Patentansprüche

1. Brennkraftmaschine mit einem Arbeitszylinder, in dem ein Kolben zyklisch zwischen einem oberen Totpunkt (OT) und einem unteren Totpunkt (UT) bewegt wird, wobei dem Arbeitszylinder zwei Einlassventile und zwei Auslassventile zugeordnet sind, und zwei Nockenwellen (16, 18), die jeweils ein Einlassventil und ein Auslassventil betätigen, wobei eine Nockenwelle als variable Nockenwelle (18) mit einem Versteller (28) zur Verstellung der Ventilsteuerzeiten und die andere als feste Nockenwelle mit nicht veränderbaren Ventilsteuerzeiten ausgebildet ist, **dadurch gekennzeichnet, dass** das Öffnen des von der festen Nockenwelle betätigten Auslassventils in einem Bereich zwischen 0° und 25°KW vor dem unteren Totpunkt des Kolbens erfolgt.

2. Brennkraftmaschine nach Anspruch 1, **dadurch gekennzeichnet, dass** das Öffnen des von der festen Nockenwelle betätigten Auslassventils in einem Bereich von 10° bis 20°KW vor UT und vorzugsweise bei ca. 20°KW vor UT erfolgt.

3. Brennkraftmaschine nach Anspruch 1 oder 2, **dadurch gekennzeichnet, dass** der Versteller (28) derart ausgebildet Ist, dass dieser einen Verstellbereich von ca. 50° aufweist.

4. Brennkraftmaschine nach einem der vorhergehenden Ansprüche, **dadurch gekennzeichnet, dass** in einer ersten Verstellposition das von der variablen Nockenwelle (18) betätigte Auslassventil früher öffnet als das von der festen Nockenwelle (16) betätigte Auslassventil und das von der variablen Nockenwelle (18) betätigte Einlassventil gleichzeitig mit dem von der festen Nockenwelle (16) betätigten Einlassventil öffnet und schließt.

5. Brennkraftmaschine nach Anspruch 4, **dadurch gekennzeichnet, dass** das der variablen Nockenwelle zugeordnete Auslassventil bei ca. 45°KW vor UT öffnet.

6. Verfahren zum Betrieb einer Brennkraftmaschine gemäß Anspruch 4 oder 5, **dadurch kennzeichnet, dass** diese im Kaltlauf mit einem Verstellwinkel von 0° bis ca. 5° betrieben wird.

7. Verfahren nach Anspruch 6, **dadurch gekennzeichnet, dass** die Brennkraftmaschine bei Volllast mit einem Verstellwinkel von ca. 0° bis ca. 15° betrieben wird.

8. Verfahren nach Anspruch 6 oder 7, **dadurch gekennzeichnet, dass** die Brennkraftmaschine bei Teillast mit einem Verstellwinkel von ca. 15° bis ca. 50° betrieben wird.

## Claims

1. An internal combustion engine with an operating cylinder, in which a piston is moved cyclically between an upper dead center (OT) and a lower dead center (UT), wherein two intake valves and two exhaust valves are assigned to the operating cylinder, and two cam shafts (16, 18), which in each case actuate an intake valve and an exhaust valve, wherein one cam shaft is designed as a variable cam shaft (18) with an adjuster (28) for adjusting the valve control times and the other cam shaft is designed as a fixed cam shaft with non-variable valve control times, **characterized in that** the opening of the exhaust valve actuated by the fixed cam shaft takes place in the range between 0° and 25° KW (crank angle) before the lower dead center of the piston.

2. The internal combustion engine according to Claim 1, **characterized in that** the opening of the exhaust valve actuated by the fixed cam shaft takes place in a range of 10° to 20° KW before UT and preferably at approx. 20° KW before UT.

3. The internal combustion engine according to Claim 1 or 2, **characterized in that** the adjuster (28) is designed in such a manner that said adjuster has an adjustment range of approx. 50°.

4. The internal combustion engine according to any one of the preceding claims, **characterized in that** in a first adjustment position the exhaust valve actuated by the variable cam shaft (18) opens earlier than the exhaust valve actuated by the fixed cam shaft (16) and the intake valve actuated by the variable cam shaft (18) opens and closes simultaneously with the intake valve actuated by the fixed cam shaft (16).

5. The internal combustion engine according to Claim 4, **characterized in that** the exhaust valve assigned to the variable cam shaft opens at approx. 45° KW before UT.

6. A method for operating an internal combustion engine according to Claim 4 or 5, **characterized in that** said internal combustion engine is operated with an adjustment angle of 0° to approx. 5° in cold run.

7. The method according to Claim 6, **characterized in that** the internal combustion engine is operated at full load with an adjustment angle of approx. 0° to approx. 15°.

8. The method according to Claim 6 or 7, **characterized in that** the internal combustion engine is operated at partial load with an adjustment angle of approx. 15° to approx. 50°.

## Revendications

1. Moteur à combustion interne avec un cylindre de travail dans lequel un piston est déplacé cycliquement entre un point mort haut (PMH) et un point mort bas (PMB), dans lequel deux soupapes d'admission et deux soupapes d'échappement sont affectées au cylindre de travail, et deux arbres à cames (16, 18) qui actionnent respectivement une soupape d'admission et une soupape d'échappement, dans lequel un arbre à cames est constitué en tant qu'arbre à cames (18) variable avec un dispositif d'avance (28) pour la commande d'avance de la distribution, et l'autre est constitué en tant qu'arbre à cames fixe avec une distribution non modifiable, **caractérisé en ce que** l'ouverture de la soupape d'échappement actionnée par l'arbre à cames fixe s'effectue dans une plage de 0° à 25° de rotation de vilebrequin avant le point mort bas du piston.

2. Moteur à combustion interne selon la revendication 1, **caractérisé en ce que** l'ouverture de la soupape d'échappement actionnée par l'arbre à cames fixe s'effectue dans une plage de 10° à 20° de rotation de vilebrequin avant le PMB, et de préférence à env. 20° de rotation de vilebrequin avant le PMB.

3. Moteur à combustion interne selon la revendication 1 ou 2, **caractérisé en ce que** le dispositif d'avance (28) est constitué de telle sorte qu'il comporte une plage de réglage d'environ 50°.

4. Moteur à combustion interne selon l'une des revendications précédentes, **caractérisé en ce que,** dans une première position de réglage, la soupape d'échappement actionnée par l'arbre à cames (18) variable s'ouvre plus tôt que la soupape d'échappement actionnée par l'arbre à cames (16) fixe, et la soupape d'admission actionnée par l'arbre à cames (18) variable s'ouvre et se ferme en même temps que la soupape d'admission actionnée par l'arbre à cames (16) fixe.

5. Moteur à combustion interne selon la revendication 4, **caractérisé en ce que** la soupape d'échappement affectée à l'arbre à cames variable s'ouvre à env. 45° de rotation de vilebrequin avant le PMB.

6. Procédé de fonctionnement d'un moteur à combustion interne selon la revendication 4 ou 5, **caractérisé en ce que** pendant la marche à froid ce moteur fonctionne avec un angle de réglage de 0° à env. 5°.

7. Procédé selon la revendication 6, **caractérisé en ce que,** en pleine charge, le moteur à combustion interne fonctionne avec un angle de réglage d'env. 0° à env. 15°.

8. Procédé selon la revendication 6 ou 7, **caractérisé en ce que,** en charge partielle, le moteur à combustion interne fonctionne avec un angle de réglage d'env. 15° à env. 50°.
